# EUROPEAN PATENT SPECIFICATION

(11) **EP 3 760 692 B1**
(45) Date of publication and mention of the grant of the patent: **15.03.2023**
(21) Application number: 19778217.0
(22) Date of filing: 26.03.2019
(51) Int. Cl.: C09K 11/88, C09K 11/56, C09K 11/62, B82Y 20/00, B82Y 40/00, C09K 11/08, C09K 11/02, C09K 11/70

(54) **RED-EMITTING QUANTUM DOTS HAVING NARROW FULL WIDTH AT HALF MAXIMUM AND EMISSION WAVELENGTH FOR APPLICATION TO HIGH-COLOR-PURITY DISPLAY, AND PREPARATION METHOD THEREFOR**
ROT-EMITTIERENDE QUANTENPUNKTE MIT SCHMALER VOLLBREITE BEI HALBEM MAXIMUM UND EMISSIONSWELLENLÄNGE ZUR ANWENDUNG IN EINER HOCHREINEN FARBANZEIGE UND HERSTELLUNGSVERFAHREN DAFÜR
BOITES QUANTIQUES ÉMETTANT DANS LE ROUGE AYANT UNE LARGEUR TOTALE ÉTROITE À MI-HAUTEUR ET LONGUEUR D'ONDE D'ÉMISSION POUR APPLICATION À UN AFFICHAGE À GRANDE PURETÉ DE COULEURS, ET LEUR PROCÉDÉ DE PRÉPARATION

(30) Priority: 28.03.2018 KR 20180035853
(43) Date of publication of application: 06.01.2021
(73) Proprietor: Daegu Gyeongbuk Institute of Science and Technology, Dalseong-gun, Daegu 42988 (KR)
(72) Inventor: LEE, Jong Soo, Daegu 42779 (KR); PARTHIBAN, Ramasamy, Dalseong-Gun, Daegu 42988 (KR)
(74) Representative: Prüfer & Partner mbB Patentanwälte · Rechtsanwälte
(86) International application number: PCT/KR2019/003467
(87) International publication number: WO 2019/190147

(56) References cited:
- EP-A1- 3 135 743
- CN-A- 106 479 482
- KR-A- 20140 121 217
- KR-A- 20140 121 217
- KR-A- 20170 080 795
- KR-B1- 101 768 998
- KR-B1- 101 768 998
- RENGUO XIE ET AL: "InAs/InP/ZnSe core/shell/shell quantum dots as near-infrared emitters: Bright, narrow-band, non-cadmium containing, and biocompatible", NANO RESEARCH, vol. 1, no. 6, 1 December 2008 (2008-12-01), pages 457-464, XP055640889, CN ISSN: 1998-0124, DOI: 10.1007/s12274-008-8048-x
- XI, L. et al.: "Understanding the Role of Single Molecular ZnS Precursors in the Synthesis in(Zn)P/ZnS Nanocrystals", ACS applied materials & interfaces, vol. 6, no. 20, 2014, pages 18233-18242, XP055383550, DOI: 10.1021/am504988j
- RAMASAMY, P. et al.: "Tunable, Bright, and Narrow-Band Luminescence from Colloidal Indium Phosphide Quantum Dots", Chemistry of materials, vol. 29, no. 16, 2017, pages 6893-6899, XP055638772,

## Description

### [Cross-Reference to Related Application]

This application is a National Stage Entry of PCT International Application No. PCT/KR2019/003467, which was filed on March 26, 2019, and which claims priority to Korean Patent Application No. 10-2018-0035853, filed on March 28, 2018 in the Korean Intellectual Property Office.

### [Technical Field]

The present invention relates to red-emitting quantum dots having a light emission wavelength for application to a high color-purity display and a narrow Full Width at Half Maximum (FWHM) and a method of manufacturing the same, and more particularly, to a method of manufacturing quantum dots having a light emission wavelength for application to a high color-purity display and a narrow FWHM, using a seed synthesis growth method and a continuous cluster injection method.

### [Background Art]

Quantum dots (QD), which are nanoscopic semiconductive particles having a threedimensionally limited size, exhibit excellent optical and electrical characteristics, which are absent in semiconducting materials, in a bulk state. For example, even if quantum dots are made of the same material, the color of light emitted may vary depending on particle size. Due to such characteristics, quantum dots are attracting attention as a material for next-generation high-brightness light emitting diodes (LEDs), biosensors, and lasers, a nanomaterial for solar cells, etc.

Currently, a nonhydrolytic synthesis method is commonly used as a manufacturing method to form quantum dots. According to the nonhydrolytic synthesis method, a roomtemperature organometallic compound is rapidly injected to a high-temperature solvent using a precursor to cause nucleation through a pyrolysis reaction, and then temperature is elevated to cause nuclear growth, thereby producing quantum dots. Quantum dots mainly synthesized by the nonhydrolytic synthesis method contain cadmium (Cd) such as cadmium selenide (CdSe) or cadmium telluride (CdTe). However, when considering the current trend of pursuing green industry due to increased awareness of environmental issues, it is necessary to minimize use of cadmium (Cd), one of representative environmental pollutants that pollute water and soil.

Therefore, as an alternative to replacing existing CdSe quantum dots or CdTe quantum dots, it is being considered to manufacture quantum dots using a semiconductor material that excludes cadmium. As one example, there are indium phosphide (InP) quantum dots. Since InP quantum dots can emit light in the visible spectrum, which is a light emitting region similar to CdSe quantum dots material, InP quantum dots can replace CdSe quantum dots and can be used to manufacture a high-brightness light emitting diode device.

However, since it is difficult to synthesize InP quantum dots by a general method, there is difficulty in mass-producing InP quantum dots. In addition, it is difficult to uniformize particle sizes of InP quantum dots, and the quantum yield (QY) of InP quantum dots is low, compared to existing CdSe.

As a method to address the disadvantages of InP quantum dots, there is a method of coating a surface of an InP core with a group II-VI compound, such as zinc sulfide (ZnS), having a wider bandgap than that of a core to form a shell. When the InP core is coated with a group II-VI compound having a wider bandgap than that of a core, problems, such as difficulty in maintaining luminescence stability or controlling size, of InP quantum dots formed of a group III-V compound can be addressed to some extent. However, with regard to coating a shell, problems such as productivity (reaction time), manufacturing cost or environment (sample amount or odor, etc.), and uniformity of coating, need to be sufficiently considered. If the shell is not well formed, the luminous efficacy of the quantum dots may be decreased and luminous properties may be exhibited very sensitively to changes in surface molecules.

In addition, the previously reported red-emission InP-based nanoparticles have a quantum efficiency of 50% or less, and a Full Width at Half Maximum (FWHM) of 50 nm or more which determines a color purity. Accordingly, the red-emission InP-based nanoparticles have been reported to have problems with regard to color purity improvement and stability. Therefore, there is a need for quantum dots that can address problems of FWHM and quantum efficiency.
<Related Art Document> Korean Patent No. 10-1665450

Further related art document KR 2014 0121217 A discloses an embodiment in which a quantum dot of an InZnP/ZnSe/ZnS stacked structure is formed by adding a ZnSe shell and a ZnS shell to an InZnP core as the core of the quantum dot.

### [Disclosure]

### [Technical Problem]

Therefore, the present invention has been made in view of the above problems, and it is one object of the present invention to provide red-emitting quantum dots and a shell coating method that are capable of addressing the problem that eco-friendly nanoparticles having an quantum dot core/shell structure do not achieve a Full Width at Half Maximum (FWHM) of 40 nm or less and a quantum efficiency of 70% or more.

It will be understood that technical problems of the present invention are not limited to the aforementioned problem and other technical problems not referred to herein will be clearly understood by those skilled in the art from the description below.

### [Technical Solution]

In accordance with an aspect of the present invention, the above and other objects can be accomplished by the provision of a method of manufacturing quantum dots, the method comprising: preparing a mixture including an InX-based quantum dot seed; continuously injecting a Zn(In)X-based cluster to the mixture to form an InX-based core; adding a selenium compound and a zinc precursor to the mixture to form a first shell to be coated on the InX-based core; and adding a sulfur compound and the zinc precursor to the mixture to form a second shell to be coated on the first shell, wherein the InX-based core comprises In, Zn and P in the core and a Zn layer at a surface of the core, wherein the first shell is formed of ZnSe, the second shell is formed of ZnS, and X comprises phosphorus (P), arsenic (As) or antimony (Sb).

In addition, the InX-based quantum dot seed may be mixed with an indium precursor, an acid, and a trimethylsilyl precursor to form InX nanoparticles, wherein the indium precursor comprises indium acetate, indium acetylacetonate, InSb or InAs, wherein the acid comprises a carboxylic acid ligand, wherein the carboxylic acid ligand comprises palmitic acid, stearic acid, myristic acid or oleic acid, wherein the trimethylsilyl precursor comprises tris(trimethylsilyl)phosphine ((TMS)3P), tris(trimethylsilyl)antimony or tris(trimethylsilyl)arsenide.

In addition, the Zn(In)X-based cluster may be mixed with an indium precursor, an acid, a zinc precursor and a trimethylsilyl precursor to form an aggregate in a supercrystalline state in which In and Zn crystals are bonded, wherein the indium precursor comprises indium acetate, indium acetylacetonate, InSb or InAs, wherein the acid comprises a carboxylic acid ligand, wherein the carboxylic acid ligand comprises palmitic acid, stearic acid, myristic acid or oleic acid, wherein the trimethylsilyl precursor comprises tris(trimethylsilyl)phosphine ((TMS)3P), tris(trimethylsilyl)antimony or tris(trimethylsilyl)arsenide.In addition, the InX-based quantum dot seed may include InP, InAs, InSb, InxGal-xP, InxGal-xAs, InxGal-xSb, InxAl1-xP, InxAl1-xAs, InxAl1-xSb, InxZnyP, InxZnyAs, InxZnySb, InxMgyP, InxMgyAs, and InxMgySb, where x or y is 1 to 30.

In addition, the Zn(In)X-based cluster may be continuously injected at 200°C or higher at a rate of 0.05 mmol/h to 0.3 mmol/h.

In addition, the core may have a size of 1.9 nm to 4.5 nm.

In addition, the core may have a size of 3.5 nm to 4.5 nm.

In addition, the selenium compound may include trioctylphosphine (TOP)Se.

In addition, the zinc precursor may include one or more selected from among zinc acetate, zinc acetylacetonate, zinc stearate and zinc oleate.

In addition, the sulfur compound may include 1- dodecanethiol (1-DDT).

In addition, the first shell and the second shell may be formed by a Successive Ion Layer Adsorption and Reaction (SILAR) method. Thereby, the Successive Ion Layer Adsorption and Reaction (SILAR) method may be carried out at 200°C to 400°C.

In addition, the quantum dots may have a size of 1.9 nm to 6 nm.

In addition, the quantum dots may have a size of 3.7 nm to 6 nm.

In addition, the quantum dots may emit at a light emission wavelength of 380 nm to 750 nm.

In addition, the quantum dots may emit at a light emission wavelength of 600 nm to 750 nm.

### [Advantageous effects]

According to an embodiment of the present invention, InX-based core/ZnSe shell/ZnS shell quantum dots capable of emitting light having variable high color purity at a wavelength of 380 nm to 800 nm can be provided.

In addition, an InX-based core according to an embodiment of the present invention can exhibit excellent light-emitting efficiency, color purity and color reproducibility in a wide range of light-emitting area from visible light to near-infrared light.

In addition, since a ZnSe/ZnS shell is formed on an InX-based core, a surface and interior of the core can be protected against external environments.

In addition, since the ZnSe/ZnS multishell is formed on the InX-based core, improved quantum efficiency and electron transport characteristics can be provided and thus excellent electron mobility can be provided, compared to the case of a single shell.

In addition, by using a seed growth method and a continuous cluster injection method, quantum dots can be uniformly grown and can exhibit a narrow size distribution in an absorption spectrum.

In addition, since zinc (Zn) is mixed during core formation, problems of existing methods such as absorption characteristic deterioration and a wide emission line width can be addressed and an interface between a core and a shell can be softened, thereby being capable of facilitating uniform coating with a ZnSe shell.

In addition, the InX-based core/ZnSe shell/ZnS shell core-shell quantum dots manufactured according to the method of the present invention can be red-emitting quantum dots exhibiting an FWHM of about 40 nm or less and a high quantum yield (QY) of 70% or more.

Further, by the seed growth method and the continuous implantation method of the present invention, uniform core quantum dots can be synthesized and shells can be deposited without defects at interfaces thereof.

It should be understood that the effects of the present invention are not limited to the effects described above, but include all effects that can be deduced from the detailed description of the present invention or the constitution of the invention described in the claims.

### [Description of Drawings]

FIG. 1 is a flowchart illustrating a method of manufacturing quantum dots according to the present invention.
FIG. 2 is a schematic diagram illustrating continuous injection of a cluster according to an embodiment of the present invention.
FIG. 3 is a schematic diagram illustrating a method of manufacturing quantum dots according to an embodiment of the present invention.
FIG. 4 illustrates graphs and TEM images of experimental data according to an embodiment of the present invention.
FIG. 5 illustrates light emission and absorption in a visible light wavelength band of quantum dots manufactured according to an embodiment of the present invention.
FIG. 6 illustrates a schematic diagram and graphs of a display device that is manufactured using quantum dots manufactured according to an embodiment of the present invention.
FIG. 7 is a graph illustrating three-stage growth of quantum dots manufactured according to an embodiment of the present invention.
FIG. 8 illustrates graphs of a seed-mediated synthesis method according to an embodiment of the present invention compared to an existing heating-up method and SILAR method.
FIG. 9 is a set of graphs illustrating experiment results of quantum dot growth dependent upon a cluster injection rate according to an embodiment of the present invention.
FIG. 10 is a graph illustrating experimental results of quantum dot absorption peak position changes dependent upon a cluster injection rate according to an embodiment of the present invention.
FIG. 11 illustrates a TEM image of the quantum dots manufactured according to an embodiment of the present invention.
FIG. 12 is a set of graphs illustrating experimental results of quantum dot growth dependent upon a reaction temperature according to an embodiment of the present invention.
FIG. 13 illustrates an XRD graph and an HAADF-STEM image of quantum dots manufactured according to an embodiment of the present invention.
FIG. 14 illustrates HAADF-STEM images and an energy-dispersive X-ray chemical map of quantum dots manufactured according to an embodiment of the present invention.

### [Best Mode]

Hereinafter, the present invention will be described in detail with reference to the accompanying drawings. The present invention may, however, be embodied in many different forms and should not be construed as limited to the embodiments set forth herein. To clearly explain the present invention, parts not related to the description are omitted in the drawings, and similar reference numerals are given to similar parts throughout this specification.

In the specification, when it is described that a certain part is "connected (accessed, contacted, or coupled" to another part, it should be understood that the certain part may be "directly connected" to another part or "indirectly connected" to another part via another member in the middle. In addition, when a certain part "includes" a certain component, this indicates that the part may further include another component instead of excluding another component unless specifically described otherwise.

The terminology used herein is for the purpose of describing particular embodiments only and is not intended to be limiting of the inventive concept. The expression of singularity in the present specification includes the expression of plurality unless clearly specified otherwise in the context. Also, the terms such as "include" or "comprise" may be construed to denote a certain characteristic, number, step, operation, component, or a combination thereof in the specification, but may not be construed to exclude the presence of or a possibility of addition of one or more other characteristics, numbers, steps, operations, components, or combinations thereof.

Now, an embodiment of the present invention is described in detail with reference to the attached drawings.

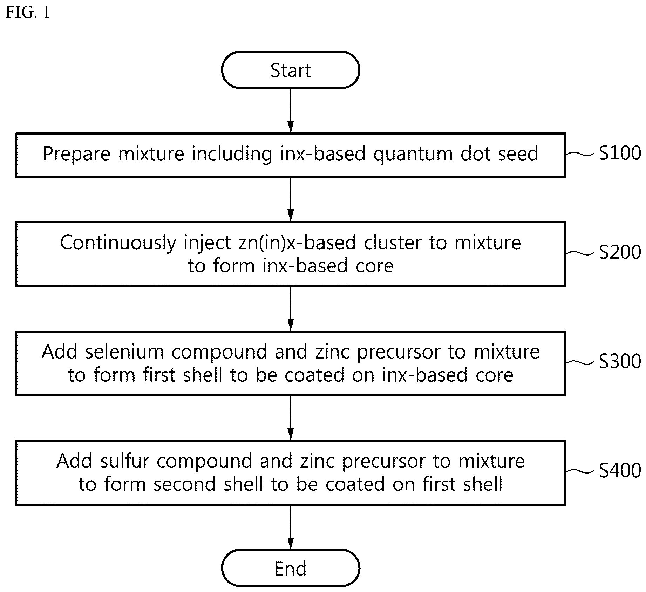

FIG. 1 is a flowchart illustrating a method of manufacturing quantum dots according to an embodiment of the present invention.

Referring to FIG. 1, the method of manufacturing quantum dots according to an embodiment of the present invention includes a step (S100) of preparing a mixture including an InX-based quantum dot seed, a step (S200) of continuously injecting a Zn(In)X-based cluster to the mixture to form an InX-based core, a step (S300) of adding a selenium compound and a zinc precursor to the mixture to form a first shell to be coated on the InX-based core, and a step (S400) of adding a sulfur compound and the zinc precursor to the mixture to form a second shell to be coated on the first shell, wherein the first shell is formed of ZnSe, the second shell is formed of ZnS, and X includes phosphorus (P), arsenic (As) or antimony (Sb).

First, a mixture including an InX-based quantum dot seed is prepared (S100).

The InX-based quantum dot seed may be mixed with an indium precursor, an acid, and a trimethylsilyl precursor to form InX nanoparticles.

The InX-based quantum dot seed (QD Seed) may be formed of In and X nanoparticles.

For example, X may include phosphorus (P), arsenic (As) or antimony (Sb).

For example, the InX-based quantum dot seed may include InP, InAs, InSb, InxGa1-xP, InxGal-xAs, InxGal-xSb, InxAl1-xP, InxAl1-xAs, InxAl1-xSb, InxZnyP, InxZnyAs, InxZnySb, InxMgyP, InxMgyAs, and InxMgySb, wherein x or y is 1 to 30.

For example, indium acetate as an indium precursor, palmitic acid as an acid, and tris(trimethylsilyl)phosphine ((TMS)3P) as a trimethylsilyl precursor may be mixed to form InP nanoparticles, thereby preparing an InP quantum dot seed.

Next, a Zn(In)X-based cluster is continuously injected into the mixture to form an InX-based core (S200).

The Zn(In)X-based cluster may be mixed with an indium precursor, an acid, a zinc precursor and a trimethylsilyl precursor to form an aggregate in a supercrystal state in which In and Zn crystals are bonded.

For example, X may include phosphorus (P), arsenic (As) or antimony (Sb).

The Zn(In)X-based cluster may mean a crystal group formed by connecting crystals to each other in a supercrystal state, or a large aggregate of crystals.

In addition, the InX-based core may mean an InX-based core wherein zinc (Zn) is grown on an InX-based quantum dot seed (QD seed) by continuously injecting a Zn(In)X-based cluster to the InX-based quantum dot seed (QD seed) at a certain concentration and speed.

For example, the indium precursor may include indium acetate, indium acetylacetonate, InSb or InAs.

In addition, the acid may include a carboxylic acid ligand.

For example, the carboxylic acid ligand may include palmitic acid, stearic acid, myristic acid or oleic acid.

For example, the zinc precursor may include one or more selected from among zinc acetate, zinc acetylacetonate, zinc stearate and zinc oleate.

In addition, the trimethylsilyl precursor may include tris(trimethylsilyl)phosphine ((TMS)3P), tris(trimethylsilyl)antimony or tris(trimethylsilyl)arsenide.

For example, an InP core may be prepared by mixing indium acetate as an indium precursor, oleic acid as an acid, zinc acetate as a zinc precursor, and tris(trimethylsilyl)phosphine ((TMS)3P) as a trimethylsilyl precursor with the InP quantum dot seed and continuously injecting a Zn(In)P cluster, as an aggregate in a supercrystalline state in which In and Zn crystals are bonded, thereto.

For example, the Zn(In)X-based cluster may be continuously injected at 200°C or higher at a rate of 0.05 mmol/h to 0.3 mmol/h.

The Zn(In)X-based cluster injection rate may affect the concentration of the cluster. When the Zn(In)X-based cluster injection rate is 0.05 mmol/h to 0.3 mmol/h, quantum dots grow to an appropriate size capable of exhibiting excellent color purity and red light-emitting diode effect. Accordingly, the rate range is preferred.

For example, when the cluster is continuously injected at a rate of 0.1 mmol/h, quantum dots growing from the seed may have a wide range of absorption peaks.

In addition, growth of the InX-based quantum dot seed is based on tight binding and high coverage of an oleate ligand to a surface of the seed, and, when an injection temperature of the Zn(In)X-based cluster is less than 200°C, activity of surface reaction of crystals spreads and expands to surfaces of monomers may be decreased and accessibility of monomers to surfaces allowing growth of a seed may be blocked during continuous growth at a low temperature.

In addition, when the Zn(In)X-based cluster is continuously injected to the InX-based quantum dot seed so that the InX-based quantum dot seed grows inside the cluster, core larger than the seed may be formed.

In addition, the method of continuously injecting a cluster to a quantum dot seed to form a core may address existing difficulty in synthesizing a uniform quantum dot core according to rapid precursor consumption, thereby being capable of providing a very uniform core particle synthesis technology through stable precursor supply and reaction mechanism control by synthesizing a cluster initially and feeding the same into a reactor.

The size of the core may be 1.9 nm to 4.5 nm.

More preferably, the core size may be 3.5 nm to 4.5 nm.

For example, existing cores may be synthesized to have an average size of 1.9 nm and there is a limitation in further increasing the size, but the present invention uses a method of continuously injecting a cluster to a quantum dot seed to increase the size of core, thereby being capable of allowing a core to grow to a size of 4.5 nm and, accordingly, to have an absorption spectrum in a wavelength range of 490 nm to 650 nm.

In addition, since the core is formed to have a size of 1.9 nm to 4.5 nm according to the present invention, the present invention can address existing FWHM limitation problems of quantum dots, thereby being capable of addressing red-emitting nanoparticles having an FWHM of 40 nm or less and a quantum efficiency of 70% or more.

Next, a selenium compound and the zinc precursor are added to the mixture to form a first shell to be coated on the InX-based core (S300).

For example, the selenium compound may include trioctylphosphine (TOP)Se.

For example, the zinc precursor may include one or more selected from among zinc acetate, zinc stearate and zinc oleate.

According to an embodiment of the present invention, trioctylphosphine-Se (TOP-Se) and zinc stearate are added to the first shell surrounding the InX-based core and reaction is allowed to proceed, followed by adding trioctylphosphine-Se (TOP-Se) thereto once more to form a ZnSe shell as the first shell, but the present invention is not limited thereto.

In addition, after synthesizing TOP-Se, the synthesized TOP-Se may be directly added to the InX-based core.

In addition, the first shell is made of an inorganic material so as to address a problem that quantum dots formed of only cores are easily oxidized by an external environment and a problem that quantum efficiency is decreased due to electron-hole recombination, etc. generated by defects or dangling bonds on surfaces of quantum dot cores, and so as to protect the core and maintain efficiency.

Next, a sulfur compound and the zinc precursor are added to the mixture to from a second shell to be coated on the first shell (S400).

For example, the sulfur compound may include 1- dodecanethiol (1-DDT).

For example, the zinc precursor may include one or more selected from among zinc acetate, zinc stearate and zinc oleate.

According to an embodiment of the present invention, a ZnS shell, as the second shell, is formed by reacting 1-dodecanethiol (1-DDT) with and Zn-oleate, but the present invention is not limited thereto.

The first and second shells may be formed using a Successive Ion Layer Adsorption and Reaction (SILAR) method.

In addition, the SILAR method may be performed at 200°C to 400°C.

The SILAR method, which is characterized by performing continuous injection to a core and allowing reaction at high temperature, allows uniform size distribution maintenance of grown quantum dots.

For example, a quantum dot absorption peak may be adjusted up to 480 nm to 615 nm to correspond to size increase to 1.8 nm to 3.6 nm by reacting SILAR 7 cycles.

Accordingly, the first and second shells may be deposited while exhibiting excellent characteristics without interface defects by continuous cell synthesis and quantitative precursor supply through a continuous injection method.

In addition, the shell can protect the quantum dot core from being easily oxidized by oxygen and moisture coming from the outside and can improve luminescence characteristics.

To improve the luminescence characteristics of the shell, a brighter bandgap may be applied.

In addition, although chemical stability increases with increasing cell thickness, the cell thickness should be optimized to maximize quantum efficiency of quantum dots.

For example, by forming a ZnSe/ZnS multishell on an In(Zn)P core, quantum efficiency and electron transport characteristics can be improved, compared to a single cell, thereby being capable of providing excellent electron mobility.

Accordingly, the In(Zn)P/ZnSe/ZnS quantum dots can address an existing problem that a first shell formed of a group II-VI element is not thickly formed due to lattice mismatch when the first shell is formed on an InP core of group III-V. Particularly, the problem may be addressed by adding zinc (Zn) during core synthesis to be mixed with a surface, thereby softening a lattice of an interface between the core and the shell such that uniform coating is realized.

In addition, the multishell of the present invention including the second shell has a thick shell thickness to protect the core, thereby being capable of exhibiting core protection and addressing poor optical stability and reliability.

The size of the quantum dots may be 1.6 nm to 6 nm.

More preferably, the size of the quantum dots may be 3.7 nm to 6 nm.

Accordingly, the core having an average size of 1.9 nm of the present invention may grow to 3.5 nm to 4.5 nm by the method of the present invention of continuously injecting a cluster to a seed and, since a shell is formed on the core, the quantum dots of the present invention may grow to 3.7 nm to 6 nm.

When the size of the quantum dot particle is small, light of a short wavelength is generated and blue is realized. On the other hand, as the size of the particle increases, light of a long wavelength is generated and a color close to red may be realized.

The quantum dots may emit in a wavelength range of 380 nm to 750 nm.

The light emission wavelength may be in a visible light wavelength band, and the quantum dots may emit in the visible light wavelength band.

More preferably, the quantum dots may emit in a light emission wavelength range of 600 nm to 750 nm.

More preferably, a light emission wavelength range of the quantum dots may be 450 nm to 750 nm.

The present invention can provide red-emitting quantum dots having an FWHM of 40 nm or less, that is a limit in existing quantum dots, and a quantum efficiency of 70% or more.

In addition, the quantum dots grown by continuously injecting a cluster to a seed according to the present invention may have a size of 3.7 nm to 6 nm and may emit red light in a wavelength range of 600 nm to 750 nm.

Accordingly, quantum dots grown according to the manufacturing method of the present invention may emit red light having relatively low energy because a gap between energy levels is narrow with increasing size of quantum dots.

In addition, the quantum dots may have a yield of 70% or more.

In addition, the quantum dots manufactured according to the method of the present invention may have a yield of 70% or more.

All of the steps may be performed in a single container.

Since all the steps are performed in a single container, quantum dots may be manufactured through a simple process.

In addition, quantum dots manufactured according to the method of the present invention emit different colors according to a size thereof and have a structure including a core formed on an InX material; a first shell that emits brightly due to a larger bandgap than the core and is coated on the core; and a second shell that protects the core from being oxidized from the outside and is coated on the first shell, wherein the first shell is formed of ZnSe and the second shell is formed of ZnS.

For example, in the case of the In(Zn)P core structure including the core formed of an In(Zn)P-based material, indium (In), zinc (Zn) and phosphorus (P) are included in the core, and a zinc (Zn) layer is formed on a surface of the core.

The size of the quantum dots may be 1.6 nm to 6 nm.

For example, the quantum dots may emit light in a light emission wavelength range of 380 nm to 750 nm.

The light emission wavelength may be in a visible light wavelength band and may emit therein.

More preferably, the quantum dots may have a light emission wavelength range of 488 nm to 641 nm.

The quantum dots may have a quantum yield of 70% or more.

In addition, by the method of manufacturing quantum dots of the present invention, quantum dots having a quantum yield of 70% or more may be obtained.

In addition, the InX-based core may address environmental problems caused by use of existing cores including cadmium (Cd). Further, the InX-based core has a wide range of light-emitting area from visible light to near-infrared light and optical characteristics similar to a core including cadmium (Cd), thereby having excellent light-emitting efficiency. Accordingly, the InX-based core may replace existing cores including cadmium (Cd).

The shell including the first shell and the second shell may be coated to have at least two layers.

The present invention may provide quantum dots manufactured according to the method.

The quantum dots can provide excellent light-emitting efficiency, color purity and color reproducibility in a wide range of light-emitting area from visible light to near-infrared light and can protect a surface and interior of a core from being damaged due to external environments.

### Manufacturing Example 1

### Zn(In)-P cluster

1) 1 mmol of indium acetate, 0.5 mmol of zinc acetate, and 4 mmol of oleic acid were mixed with 10 ml of ODE in an Erlenmeyer flask to form a mixture. The mixture was fixed to a Schlenk line using a reflux condenser, followed by heating at 120°C under vacuum for 12 hours.
2) The flask was charged with nitrogen and cooled to room temperature.
3) A solution containing 0.66 mmol of (TMS)₃P and 1 ml of TOP was rapidly fed into the flask, followed by allowing to stand at room temperature for 60 minutes.

### Manufacturing Example 2

In(Zn)P/ZnSe/ZnS QDs
1) 5 ml of an InP QD seed was mixed with 10 ml of dried ODE, followed by heating at 280°C.
2) An In(Zn)P cluster manufactured according to Manufacturing Example 1 was injected at a rate of 1 ml/h using a syringe pump to form In(Zn)P QDs.
3) The In(Zn)P QDs core was cooled to 150°C.
4) 1 ml of 0.4 M zinc stearate was injected, followed by allowing to stand at the same temperate for 30 minutes.
5) 0.5 ml of 0.4M TOP-Se was fed into the flask, followed by allowing to stand at 300°C for 15 minutes.
6) 1.5 ml of zinc stearate was added, followed by allowing to stand for 10 minutes, and 0.6 ml of TOP-Se was added, followed by allowing to stand at 300°C for 15 minutes.
7) 1.5 ml of zinc stearate was added, followed by allowing to stand for 10 minutes, and 0.6 ml of TOP-Se was added, followed by allowing to stand for 15 minutes, to coat a ZnSe shell.
8) 2 ml of zinc stearate was added and 0.8 ml of TOP-Se was injected to coat a ZnSe shell once more.
9) 2.5 ml of zinc stearate was added, followed by allowing to stand for 10 minutes, and then 1 ml of TOP-S was added thereto, followed by allowing to stand at 300°C for 15 minutes so that the ZnS shells were grown.
10) After cooling to room temperature, centrifugation was performed in 50 ml of isopropyl alcohol at 6000 rpm for 30 minutes to cause precipitation and obtain InP/ZnSe/ZnS quantum dots.
11) After washing the quantum dots three times with hexane, isopropyl alcohol was added thereto to be precipitated, and then the precipitate was stored in a hexane vial filled with nitrogen.

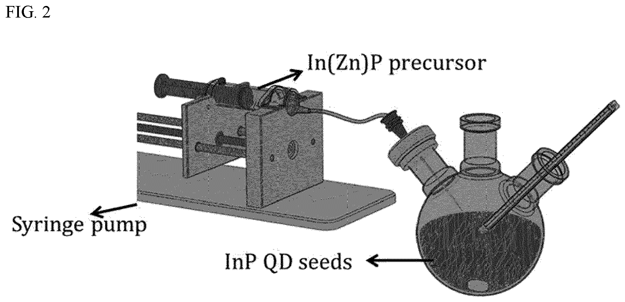

FIG. 2 is a schematic diagram illustrating continuous injection of a cluster according to an embodiment of the present invention.

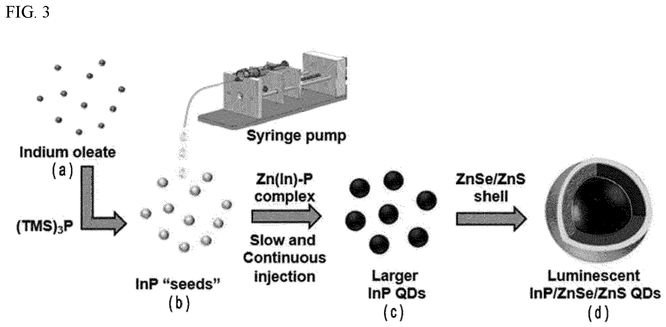

FIG. 3 is a schematic diagram illustrating a method of manufacturing quantum dots according to an embodiment of the present invention.

FIGS. 2 and 3 illustrate a method of manufacturing quantum dots according to an embodiment of the present invention.

FIG. 3(a) illustrate indium oleate (indium precursor) required for quantum dot seed formation. A trimethylsilane precursor (TMS)₃P was added to the indium precursor to form the InP "seed" of FIG. 3(b). An In(Zn)P precursor (Zn(In)X-based cluster) was continuously injected to the seed using a syringe pump, thereby forming the larger InP QDs (large InX-based core) of FIG. 3(c).

A ZnSe/ZnS shell was formed on each of the InP QDs (cores), thereby forming luminescent InP/ZnSe/ZnS QDs (quantum dots according to the present invention) of FIG. 3(d).

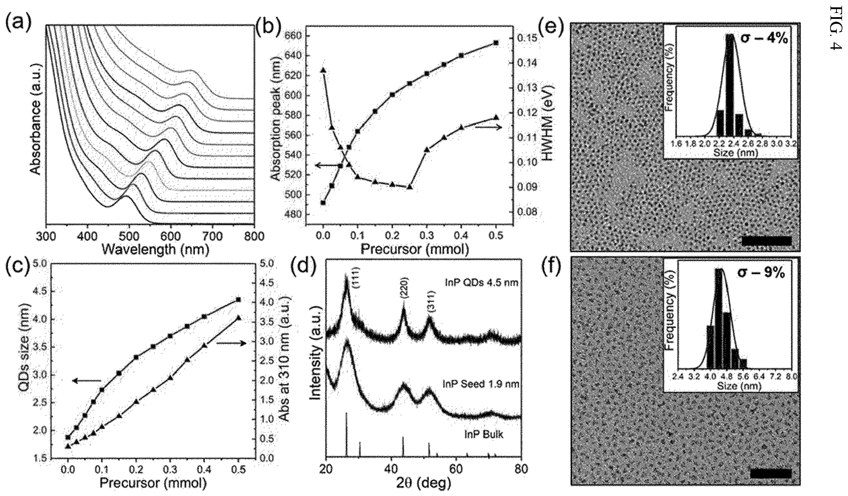

FIG. 4 illustrates graphs and TEM images of experimental data according to an embodiment of the present invention.

FIG. 4(a) illustrates a UV-vis absorption spectrum of InP QDs with different sizes synthesized by externally supplying a monomer to InP seeds. From this, it was confirmed that the InP seeds continuously grew to larger quantum dots having an absorption spectrum moving from 490 nm to 650 nm and grew to sizes of 1.9 nm to 4.5 nm.

FIG. 4(b) illustrates absorption peak positions and relative size distribution represented by HWHM of InP QD. From this, it was confirmed that size distribution was greatly improved as an absorption half value width of an initial half value decreases after reaction for 150 minutes in addition to growth.

FIG. 4(c) illustrates changes in an InPQD size and an absorbance at a wavelength of 310 nm during growth. As shown in the graphs, a precursor injected to linearly increase according to an absorbance was added to the existing InP QD, and the generation of secondary nuclei that hindered QD growth and expanded the absorption spectrum was excluded

FIG. 4(d) illustrates XRD patterns of an InP seed and 4.5 nm InP QD. A wide X-ray diffraction (XRD) peak of the seed QD increases in size after the reaction and exhibits a size change.

FIGS. 4(e) and 4(f) illustrate TEM images and size distribution histogram graphs of InP. The formation of monodisperse QDs can be confirmed, and QDs at an initial stage of synthesis maintain the spherical shape of seeds with a size distribution of less than 5% as shown in FIG. 4(e), is maintained, but at the end of the reaction, shape distribution changes from a sphere to a tetrahedron so that the distribution increases to 9% as shown in FIG. 4(f).

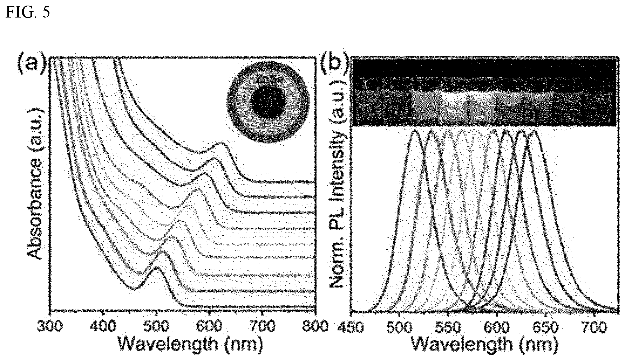

FIG. 5 illustrates light emission and absorption in a visible light wavelength band of quantum dots manufactured according to an embodiment of the present invention.

Referring to FIG. 5, FIG. 5(a) illustrates the absorbance of InP/ZnSe/ZnS quantum dots, and FIG. 5(b) illustrates a light emitting spectrum of InP/ZnSe/ZnS quantum dots and a photograph taken after UV irradiation. FIG. 5 illustrates that the quantum dots of the present invention have a full width at half-maximum (FWHM) value of less than 40 nm for all emission wavelengths and bright light emission.

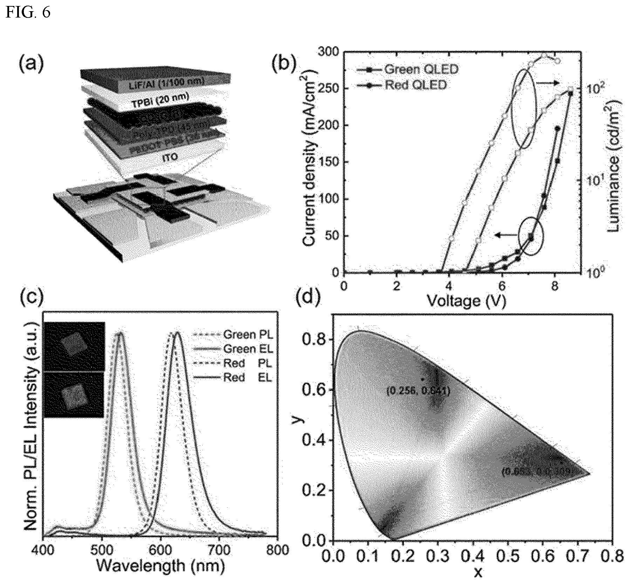

FIG. 6 illustrates a schematic diagram and graphs of a display device that is manufactured using quantum dots manufactured according to an embodiment of the present invention.

Referring to FIG. 6, FIG. 6(a) illustrates a schematic diagram of an InP/ZnSe/ZnS-based QLEDs, FIG. 6(b) illustrates voltage graphs of QLED to current density and luminance, and FIG. 6(c) illustrates QDs in a solution, EL spectrum and a PL spectrum of a QLED photograph at 0.1 mA, and FIG. 6(d) illustrates CIE coordinates of an EL spectrum of QLEDs of 0.1 mA or less.

From FIG. 6, it can be confirmed that green (533nm) and red (625nm) emission QDs of QLEDs manufactured using the quantum dots of the present invention have an emission FWHM of less than 40 nm and quantum efficiency (QY) of 62% and 45% for all emission wavelengths, thereby providing high color purity and high luminescence effect over all visible light areas and providing a red-emitting QLED having a light emission wavelength and a narrow FWHM for high color purity display applications.

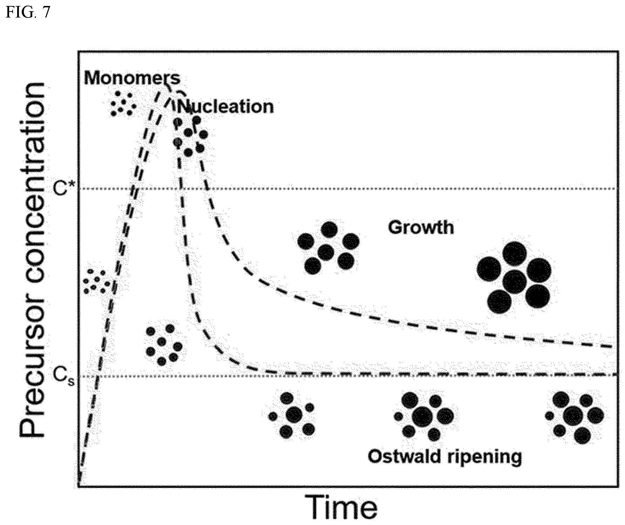

FIG. 7 is a graph illustrating three-stage growth of quantum dots manufactured according to an embodiment of the present invention.

Referring to FIG. 7, the present invention is indicated by a blue line, and a lamer plot for synthesis of monodisperse particles that includes three steps of 1) monomer generation (monomers) 2) nucleation, and 3) growth (grown by adding monomers to surfaces of nucleated particles) is illustrated.

A red line indicates a precursor concentration over time in various stages of general InPQD synthesis. The general synthesis method has a limitation with regard to quantum dot growth because Ostwald ripening occurs and surface energy of the particles becomes a driving force, and smaller particles in a dispersion system become smaller or disappear, resulting in growth of larger particles.

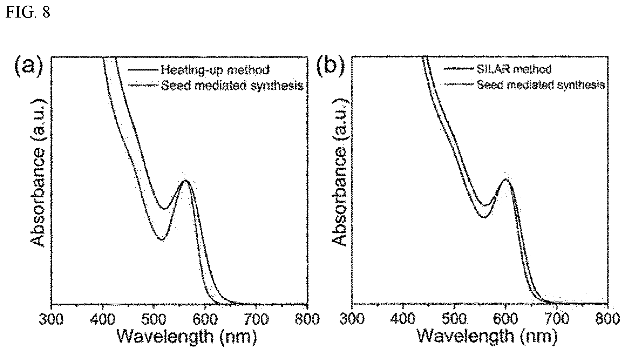

FIG. 8 illustrates graphs of a seed-mediated synthesis method according to an embodiment of the present invention compared to an existing heating-up method and a SILAR method.

Referring to FIG. 8, a conventional heating-up method and SILAR method were compared with the seed-mediated synthesis method of the present invention. The seed-mediated synthesis method of the present invention shows a difference in absorption spectrum depending on a wavelength from the conventional heating-up method and SILAR method. This indicates that the size distribution of the quantum dots obtained by the method of the present invention is much superior to that of the conventional synthesis method.

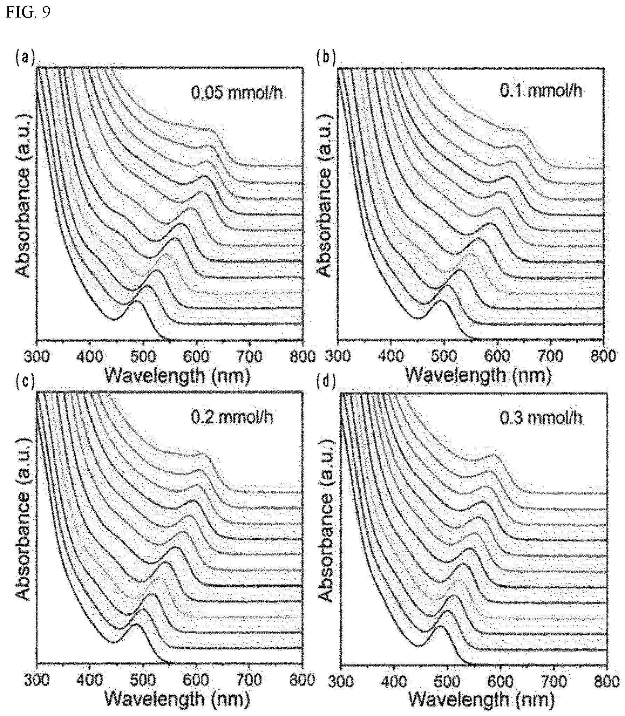

FIG. 9 is a set of graphs illustrating experimental results of quantum dot growth dependent upon a cluster injection rate according to an embodiment of the present invention.

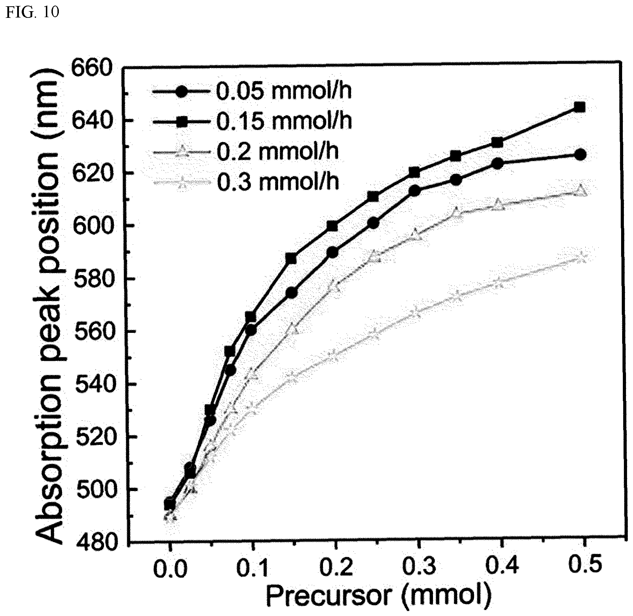

FIG. 10 is a graph illustrating experimental results of quantum dot absorption peak position changes dependent upon a cluster injection rate according to an embodiment of the present invention.

Referring to FIGS. 9 and 10, changes in absorption spectra and absorption peak positions dependent upon the cluster injection rate according to an embodiment of the present invention can be confirmed.

From this, it can be confirmed that the sizes of the quantum dots slowly increase as the cluster injection rate increases.

In addition, it can be confirmed that, when injected at a rate of 0.1 mmol/h, an absorption peak according to a precursor concentration becomes higher, so that absorption peaks in the entire visible light range appear.

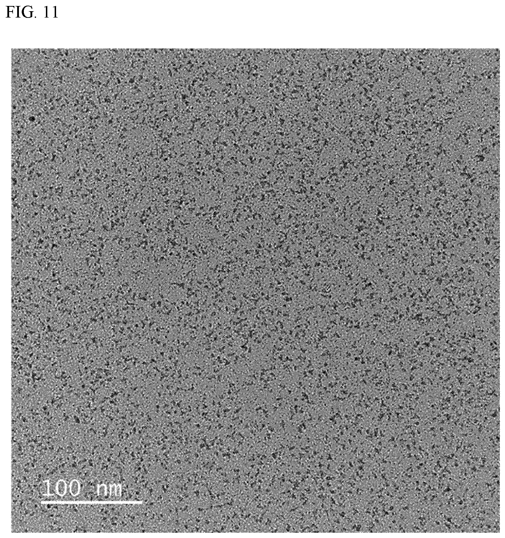

FIG. 11 illustrates a TEM image of the quantum dots manufactured according to an embodiment of the present invention.

FIG. 11 illustrates a TEM image of InP QDs manufactured at a cluster injection rate of 0.3 mmol/h at 280°C according to an embodiment of the present invention.

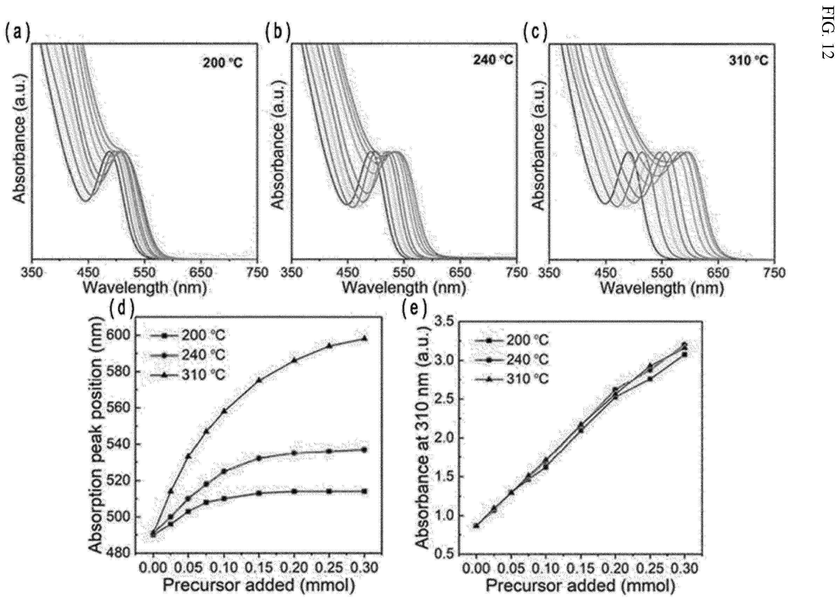

FIG. 12 is a set of graphs illustrating experimental results of quantum dot growth dependent upon a reaction temperature according to an embodiment of the present invention.

Referring to FIG. 12, FIG. 12(a) to FIG. 12(c) illustrate absorption spectra of quantum dots manufactured according to an embodiment of the present invention by varying reaction temperatures in a range of 200°C, 240°C, and 310°C.

From the graphs, it can be confirmed that the reaction temperature affects particle growth and growth of InP seeds is not observed when quantum dots are manufactured at a temperature of less than 250°C.

FIG. 12(d) illustrates absorption peaks dependent upon precursor concentrations of quantum dots manufactured at different temperatures.

FIG. 12(e) illustrates absorption peaks at a wavelength of 310 nm which are dependent upon a precursor concentration of quantum dots manufactured at different temperatures

As a result, it was confirmed that InP seeds greatly grew with increasing temperature, and the greatly grown quantum dots exhibited an absorbance in the entire visible light range.

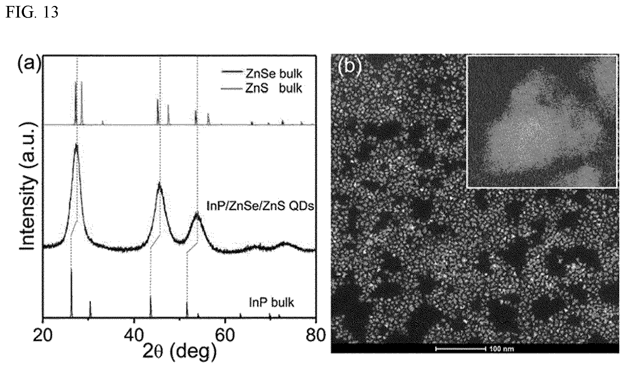

FIG. 13 illustrates an XRD graph and an HAADF-STEM image of quantum dots manufactured according to an embodiment of the present invention.

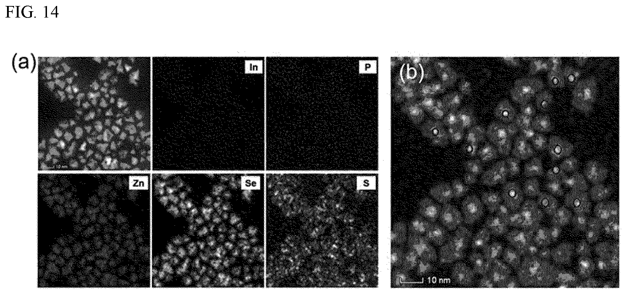

FIG. 14 illustrates HAADF-STEM images and an energy-dispersive X-ray chemical map of quantum dots manufactured according to an embodiment of the present invention.

Referring to FIGS. 13 and 14, FIG. 13(a) illustrates an XRD pattern of the quantum dots manufactured according to an embodiment of the present invention, FIG. 13(b) illustrates an HAADF-STEM image of InP/ZnSe/ZnS QDs manufactured according to an embodiment of the present invention, and FIGS. 14(a) and 14(b) illustrate overlay images of In, P, and Zn.

According to an embodiment of the present invention, InX-based core/ZnSe shell/ZnS shell quantum dots capable of emitting light having variable high color purity at a wavelength of 380 nm to 800 nm are provided.

In addition, an InX-based core according to an embodiment of the present invention exhibits excellent light-emitting efficiency, color purity and color reproducibility in a wide range of light-emitting area from visible light to near-infrared light.

In addition, since a ZnSe/ZnS shell is formed on an InX-based core, a surface and interior of the core can be protected against external environments.

In addition, since the ZnSe/ZnS multishell is formed on the InX-based core, improved quantum efficiency and electron transport characteristics can be provided and thus excellent electron mobility can be provided, compared to the case of a single shell.

In addition, by using a seed growth method and a continuous cluster injection method, quantum dots can be uniformly grown and can exhibit a narrow size distribution in an absorption spectrum.

In addition, since zinc (Zn) is mixed during core formation, problems of existing methods such as absorption characteristic deterioration and a wide emission line width can be addressed and an interface between a core and a shell can be softened, thereby being capable of facilitating uniform coating with a ZnSe shell.

In addition, the InX-based core/ZnSe shell/ZnS shell core-shell quantum dots manufactured according to the method of the present invention may be red-emitting quantum dots exhibiting an FWHM of about 40 nm or less and a high quantum yield (QY) of 70% or more.

Further, by the seed growth method and the continuous implantation method of the present invention, uniform core quantum dots can be synthesized and shells can be deposited without defects at interfaces thereof.

The aforementioned description of the present invention is provided by way of example and those skilled in the art will understand that the present invention can be easily changed or modified into other specified forms without change or modification of the technical spirit or essential characteristics of the present invention. Therefore, it should be understood that the aforementioned examples are only provided by way of example and not provided to limit the present invention. For example, each of constituents described as a single form may be separately implemented and, similarly, constituents described as being separated may be implemented in a combined form.

## Claims

1. A method of manufacturing quantum dots, the method comprising:
preparing a mixture including an InX-based quantum dot seed;
continuously injecting a Zn(In)X-based cluster to the mixture to form an InX-based core;
adding a selenium compound and a zinc precursor to the mixture to form a first shell to be coated on the InX-based core; and
adding a sulfur compound and the zinc precursor to the mixture to form a second shell to be coated on the first shell,
wherein the InX-based core comprises In, Zn and P in the core and a Zn layer at a surface of the core,
wherein the first shell is formed of ZnSe, the second shell is formed of ZnS, and X comprises phosphorus (P), arsenic (As) or antimony (Sb).

2. The method according to claim 1, wherein the InX-based quantum dot seed is mixed with an indium precursor, an acid, and a trimethylsilyl precursor to form InX nanoparticles,
wherein the indium precursor comprises indium acetate, indium acetylacetonate, InSb or InAs,
wherein the acid comprises a carboxylic acid ligand,
wherein the carboxylic acid ligand comprises palmitic acid, stearic acid, myristic acid or oleic acid,
wherein the trimethylsilyl precursor comprises tris(trimethylsilyl)phosphine ((TMS)3P), tris(trimethylsilyl)antimony or tris(trimethylsilyl)arsenide.

3. The method according to claim 1, wherein the Zn(In)X-based cluster is mixed with an indium precursor, an acid, a zinc precursor and a trimethylsilyl precursor to form an aggregate in
a supercrystalline state in which In and Zn crystals are bonded,
wherein the indium precursor comprises indium acetate, indium acetylacetonate, InSb or InAs,
wherein the acid comprises a carboxylic acid ligand,
wherein the carboxylic acid ligand comprises palmitic acid, stearic acid, myristic acid or oleic acid,
wherein the trimethylsilyl precursor comprises tris(trimethylsilyl)phosphine ((TMS)3P), tris(trimethylsilyl)antimony or tris(trimethylsilyl)arsenide.

4. The method according to claim 1, wherein the InX-based quantum dot seed comprises InP, InAs, InSb, InxGal-xP, InxGal-xAs, InxGal-xSb, InxAl1-xP, InxAl1-xAs, InxAl1-xSb, InxZnyP, InxZnyAs, InxZnySb, InxMgyP, InxMgyAs, and InxMgySb, where x or y is 1 to 30.

5. The method according to claim 1, wherein the Zn(In)X-based cluster is continuously injected at 200°C or higher at a rate of 0.05 mmol/h to 0.3 mmol/h.

6. The method according to claim 1, wherein the core has a size of 1.9 nm to 4.5 nm, or a size of 3.5 nm to 4.5 nm.

7. The method according to claim 1, wherein the selenium compound comprises trioctylphosphine (TOP)Se.

8. The method according to claim 1, wherein the zinc precursor comprises one or more selected from among zinc acetate, zinc acetylacetonate, zinc stearate and zinc oleate.

9. The method according to claim 1, wherein the sulfur compound comprises 1-dodecanethiol (1-DDT).

10. The method according to claim 1, wherein the first shell and the second shell is formed by a Successive Ion Layer Adsorption and Reaction (SILAR) method,
wherein the Successive Ion Layer Adsorption and Reaction (SILAR) method is carried out at 200°C to 400°C.

11. The method according to claim 1, wherein the quantum dots have a size of 1.9 nm to 6 nm.

12. The method according to claim 1, wherein the quantum dots have a size of 3.7 nm to 6 nm.

13. The method according to claim 1, wherein the quantum dots emit at a light emission wavelength of 380 nm to 750 nm or at a light emission wavelength of 600 nm to 750 nm.

14. Quantum dots manufactured by the method according to Claim 1.

## Patentansprüche

1. Verfahren zur Herstellung von Quantenpunkten, wobei das Verfahren umfasst:
Herstellen einer Mischung, die einen Quantenpunktkeim auf InX-Basis enthält;
kontinuierliche Injektion eines Clusters auf Zn(In)X-Basis in die Mischung, um einen Kern auf InX-Basis zu bilden;
Zugabe einer Selenverbindung und eines Zinkvorläufers zu dem Gemisch, um eine erste Hülle zu bilden, mit der der Kern auf InX-Basis zu beschichten ist; und
Zugabe einer Schwefelverbindung und des Zinkvorläufers zu dem Gemisch, um eine zweite Hülle zu bilden, mit der die erste Hülle zu beschichten ist,
wobei der Kern auf InX-Basis In, Zn und P im Kern und eine Zn-Schicht an einer Oberfläche des Kerns umfasst,
wobei die erste Hülle aus ZnSe gebildet ist, die zweite Hülle aus ZnS gebildet ist, und X Phosphor (P), Arsen (As) oder Antimon (Sb) umfasst.

2. Verfahren nach Anspruch 1, wobei der Quantenpunktkeim auf InX-Basis mit einem Indiumvorläufer, einer Säure und einem Trimethylsilyl-Vorläufer gemischt wird, um InX-Nanopartikel zu bilden,
wobei der Indiumvorläufer Indiumacetat, Indiumacetylacetonat, InSb oder InAs umfasst,
wobei die Säure einen Carbonsäure-Liganden umfasst,
wobei der Carbonsäure-Ligand Palmitinsäure, Stearinsäure, Myristinsäure oder Oleinsäure umfasst,
wobei der Trimethylsilyl-Vorläufer Tris(trimethylsilyl)phosphin ((TMS)3P), Tris(trimethylsilyl)antimon oder Tris(trimethylsilyl)arsenid umfasst.

3. Verfahren nach Anspruch 1, wobei der Cluster auf Zn(In)X-Basis mit einem Indiumvorläufer, einer Säure, einem Zinkvorläufer und einem Trimethylsilyl-Vorläufer gemischt wird, um ein Aggregat in
einem superkristallinen Zustand zu bilden, in dem In- und Zn-Kristalle gebunden sind,
wobei der Indiumvorläufer Indiumacetat, Indiumacetylacetonat, InSb oder InAs umfasst,
wobei die Säure einen Carbonsäure-Liganden umfasst,
wobei der Carbonsäure-Ligand Palmitinsäure, Stearinsäure, Myristinsäure oder Oleinsäure umfasst,
wobei der Trimethylsilyl-Vorläufer Tris(trimethylsilyl)phosphin ((TMS)3P), Tris(trimethylsilyl)antimon oder Tris(trimethylsilyl)arsenid umfasst.

4. Verfahren nach Anspruch 1, wobei der Quantenpunktkeim auf InX-Basis InP, InAs, InSb, InxGal-xP, InxGal-xAs, InxGal-xSb, InxAl1-xP, InxAl1-xAs, InxAl1-xSb, InxZnyP, InxZnyAs, InxZnySb, InxMgyP, InxMgyAs und InxMgySb umfasst, wobei x oder y 1 bis 30 ist.

5. Verfahren nach Anspruch 1, wobei der Cluster auf Zn(In)X-Basis kontinuierlich bei 200°C oder höher mit einer Geschwindigkeit von 0,05 mmol/h bis 0,3 mmol/h injiziert wird.

6. Verfahren nach Anspruch 1, wobei der Kern eine Größe von 1,9 nm bis 4,5 nm oder eine Größe von 3,5 nm bis 4,5 nm aufweist.

7. Verfahren nach Anspruch 1, wobei die Selenverbindung Trioctylphosphin (TOP)Se umfasst.

8. Verfahren nach Anspruch 1, wobei der Zinkvorläufer eine oder mehrere Verbindungen, ausgewählt aus Zinkacetat, Zinkacetylacetonat, Zinkstearat und Zinkoleat, umfasst.

9. Verfahren nach Anspruch 1, wobei die Schwefelverbindung 1-Dodecanethiol (1-DDT) umfasst.

10. Verfahren nach Anspruch 1, wobei die erste Hülle und die zweite Hülle durch ein Sukzessives lonenschichtadsorptions und -reaktions (SILAR)-Verfahren gebildet wird,
wobei das Sukzessive lonenschichtadsorptions und -reaktions (SILAR)Verfahren bei 200°C bis 400°C durchgeführt wird.

11. Verfahren nach Anspruch 1, wobei die Quantenpunkte eine Größe von 1,9 nm bis 6 nm haben.

12. Verfahren nach Anspruch 1, wobei die Quantenpunkte eine Größe von 3,7 nm bis 6 nm haben.

13. Verfahren nach Anspruch 1, wobei die Quantenpunkte bei einer Lichtemissionswellenlänge von 380 nm bis 750 nm oder bei einer Lichtemissionswellenlänge von 600 nm bis 750 nm emittieren.

14. Quantenpunkte, hergestellt durch ein Verfahren gemäß Anspruch 1.

## Revendications

1. Procédé de fabrication de boites quantiques, le procédé comprenant :
la préparation d'un mélange comportant un germe de boite quantique à base de InX ;
l'injection en continu d'un agglomérat à base de Zn(In)X dans le mélange afin de former un noyau à base de InX ;
l'ajout d'un composé de sélénium et d'un précurseur de zinc au mélange afin de former une première enveloppe à déposer sur le noyau à base de InX ; et
l'ajout d'un composé de soufre et du précurseur de zinc au mélange afin de former une seconde enveloppe à déposer sur la première enveloppe,
dans lequel le noyau à base de InX comprend de l'In, du Zn et du P dans le noyau et une couche de Zn sur une surface du noyau,
dans lequel la première enveloppe est formée de ZnSe, la seconde enveloppe est formée de ZnS et X comprend du phosphore (P), de l'arsenic (As) ou l'antimoine (Sb).

2. Procédé selon la revendication 1, dans lequel le germe de boite quantique à base de InX est mélangé à un précurseur d'indium, un acide et à un précurseur de triméthylsilyle afin de former des nanoparticules d'InX,
dans lequel le précurseur d'indium comprend l'acétate d'indium, l'acétylacétonate d'indium, l'InSb ou l'InAs,
dans lequel l'acide comprend un ligand d'acide carboxylique,
dans lequel le ligand d'acide carboxylique comprend de l'acide palmitique, l'acide stéarique, l'acide myristique ou de l'acide oléique,
dans lequel le précurseur de triméthylsilyle comprend de la tris(triméthylsilyle)phosphine ((TMS)3P), du tris(triméthylsilyle)antimoine ou du tris(triméthylsilyle)arséniure.

3. Procédé selon la revendication 1, dans lequel l'agglomérat à base de Zn(In)X est mélangé à un précurseur d'indium, un acide, un précurseur de zinc et à un précurseur de triméthylsilyle afin de former un agrégat dans un état super-cristallin dans lequel In et Zn sont liés,
dans lequel le précurseur d'indium comprend de l'acétate d'indium, de l'acétylacétonate d'indium, de l'InSb ou de l'InAs,
dans lequel l'acide comprend un ligand d'acide carboxylique,
dans lequel le ligand d'acide carboxylique comprend de l'acide palmitique, de l'acide stéarique, de l'acide myristique ou de l'acide oléique,
dans lequel le précurseur de triméthylsilyle comprend de la tris(triméthylsilyl)phosphine ((TMS)3P), du tris(triméthylsilyl)antimoine ou du tris(triméthylsilyl)arséniure.

4. Procédé selon la revendication 1, dans lequel le germe de boite quantique à base de InX comprend de l'InP, InAs, InSb, InxGal-xP, InxGal-xAs, InxGal-xSb, InxAl1-xP, InxAl1-xAs, InxAl1-xSb, InxZnyP, InxZnyAs, InxZnySb, InxMgyP, InxMgyAs, et de l'InxMgySb, dans lequel x ou y est compris entre 1 et 30.

5. Procédé selon la revendication 1, dans lequel l'agglomérat à base de Zn(In)X est injecté en continu à 200°C ou plus à un débit de 0,05 mmol/h à 0,3 mmol/h.

6. Procédé selon la revendication 1, dans lequel le noyau présente une taille de 1,9 nm à 4,5 nm ou une taille de 3,5 nm à 4,5 nm.

7. Procédé selon la revendication 1, dans lequel le composé de sélénium comprend de la tri-octylphosphine (TOP)Se.

8. Procédé selon la revendication 1, dans lequel le précurseur de zinc comprend un ou plusieurs éléments sélectionnés parmi l'acétate de zinc, l'acétylacétonate de zinc, le stéarate de zinc et l'oléate de zinc.

9. Procédé selon la revendication 1, dans lequel le composé de soufre comprend du 1-dodécanethiol (1-DDT).

10. Procédé selon la revendication 1, dans lequel la première enveloppe et la seconde enveloppe sont formées par un procédé d'adsorption et de réaction successives sur couche ionique (SILAR),
dans lequel le procédé d'adsorption et de réaction successives sur couche ionique (SILAR) est mis en oeuvre entre 200°C et 400°C.

11. Procédé selon la revendication 1, dans lequel les boites quantiques présentent une taille de 1,9 nm à 6 nm.

12. Procédé selon la revendication 1, dans lequel les boites quantiques présentent une taille de 3,7 nm à 6 nm.

13. Procédé selon la revendication 1, dans lequel les boites quantiques émettent à une longueur d'onde d'émission de lumière de 380 nm à 750 nm ou à une longueur d'onde d'émission de lumière de 600 nm à 750 nm.

14. Boites quantiques fabriquées par le procédé selon la revendication 1.
